# EUROPEAN PATENT APPLICATION

(11) **EP 2 897 048 A1**
(43) Date of publication of application: **22.07.2015**
(21) Application number: 14183534.8
(22) Date of filing: 04.09.2014
(51) Int. Cl.: G06F 9/48

(54) **Event management apparatus, event management method, and motor system**

(30) Priority: 17.01.2014 JP 2014007236
(71) Applicant: Kabushiki Kaisha Toshiba, Tokyo 105-8001 (JP)
(72) Inventor: Terayama, Tomoyuki, Tokyo, 105-8001 (JP)
(74) Representative: Hoffmann Eitle

(57) **Abstract**

An event management apparatus includes an event queue register which associates each of a plurality of triggers with one of a plurality of task starting pointers, and a task execution controller that executes, when one of the plurality of triggers is generated, a task based on a task starting pointer associated with the generated trigger. The plurality of triggers includes an external trigger and a self-generated trigger which is generated in the event management apparatus.

## Description

### CROSS-REFERENCE TO RELATED APPLICATION

This application is based upon and claims the benefit of priority from Japanese Patent Application No. 2014-007236, filed January 17, 2014, the entire contents of which are incorporated herein by reference.

### FIELD

Embodiments described herein relate generally to an event management apparatus, an event management method, and a motor system.

### BACKGROUND

Typically, it is assumed that the startup of an event management apparatus is controlled by only a CPU. During the startup control by a CPU, for example, overhead for process execution is generated. Therefore, the startup control by a CPU may not satisfy strict hard real-time performance requirements in motor controlling or the like.

### DESCRIPTION OF THE DRAWINGS

FIG. 1 is a block diagram illustrating a schematic configuration of a motor system in which an event management apparatus according to one example embodiment is used.
FIG. 2 is a diagram illustrating an example of a trigger and a task.
FIG. 3 is a diagram illustrating another example of a trigger and a task.
FIG. 4 is a diagram illustrating still another example of a trigger and a task.
FIG. 5 is a diagram illustrating still another example of a trigger and a task.
FIG. 6 is a block diagram illustrating a schematic configuration of the event management apparatus.
FIG. 7 is a diagram illustrating an example of a structure of a task schedule table.
FIG. 8 is a flowchart illustrating an example of a processing operation of the event management apparatus.
FIG. 9 is a diagram schematically illustrating a value of each register after step S1 of FIG. 8.
FIG. 10 is a diagram schematically illustrating a value of each register after step S3 of FIG. 8.
FIG. 11 is a diagram schematically illustrating a value of each register after step S4 of FIG. 8.
FIG. 12 is a diagram schematically illustrating a value of each register after step S8 of FIG. 8.
FIG. 13 depicts using tables (a) and (b) a specific example of a processing operation of the event management apparatus which is executed by a self-generated trigger of FIG. 3.
FIG. 14 depicts using tables (a) and (b) another specific example of a processing operation of the event management apparatus which is executed by the self-generated trigger of FIG. 3.
FIG. 15 is a flowchart illustrating another example of a processing operation of the event management apparatus.
FIG. 16 is a diagram schematically illustrating a value of each register after step S3 of FIG. 8.
FIG. 17 is a diagram schematically illustrating a value of each register after step S8 of FIG. 8.
FIG. 18 is a diagram schematically illustrating a value of each register when multiple event triggers are required.
FIG. 19 is a diagram schematically illustrating a value of each register in a state where multiple events are received.

### DETAILED DESCRIPTION

Embodiments provide an event management apparatus with higher performance, an event management method, and a motor system in which such an event management apparatus is used.

In general, according to one embodiment, there is provided an event management apparatus including an event queue register which associates each of a plurality of triggers with one of a plurality of task starting pointers, and a task execution controller that executes, when one of the plurality of triggers is generated, a task based on a task starting pointer associated with the generated trigger. The plurality of triggers includes an external trigger and a self-generated trigger which is generated in the event management apparatus.

Hereinafter, the example embodiments are described in detail with reference to the accompanying drawings. An event management apparatus 100 according to an example embodiment is used to control a motor as an example.

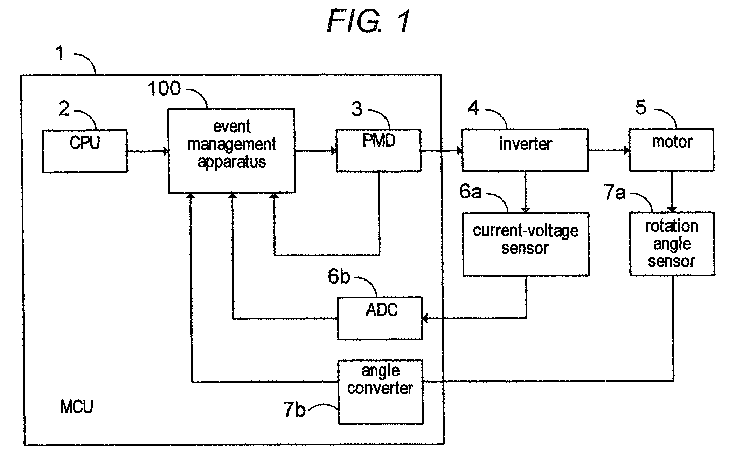

FIG. 1 is a block diagram schematically illustrating a motor system in which the event management apparatus 100 according to the example embodiment is used. The motor system includes a central processing unit (CPU) 2, the event management apparatus 100, a programmable motor driver (PMD) 3, an inverter 4, a motor 5, a current-voltage sensor 6a, an analog-to-digital converter (ADC) 6b, a rotation angle sensor 7a, and an angle converter 7b. The CPU 2, the event management apparatus 100, the PMD 3, the ADC 6b, and the angle converter 7b may be included in a micro control unit (MCU) 1.

The CPU 2 controls the event management apparatus 100. Although not illustrated, the CPU 2 may control plural event management apparatuses 100. The event management apparatus 100 is also called a vector engine and executes a task in synchronization with a startup event trigger (hereinafter, simply referred to as "trigger"). The PMD 3 generates a control signal for controlling the inverter 4 under the control of the event management apparatus 100. The inverter 4 drives the motor 5 according to the control signal. The current-voltage sensor 6a detects an analog value of the motor 5 (for example, a current flowing through the motor 5 or a voltage of each portion). The ADC 6b converts the detected analog value into a digital signal. The rotation angle sensor 7a detects a rotation angle of the motor 5. The angle converter 7b converts the detected rotation angle into a trigger. The PMD 3 and the inverter 4 control the motor 5 and thus are collectively called a motor controller.

Plural types of triggers are input to the event management apparatus 100. One of the triggers may be a CPU trigger generated by the CPU 2. In addition, one of the triggers may be a self-generated trigger generated in the event management apparatus 100. Further, one of the triggers may be an external trigger generated in a unit other than the CPU 2 and the event management apparatus 100. Examples of the external trigger include a trigger which is generated based on a carrier signal (a triangular wave signal or a saw-tooth wave signal) for periodically operating the PMD 3, an ADC trigger which is generated by the ADC 6b in synchronization with the completion of the AD conversion, and a rotation angle trigger which is generated by the angle converter 7b based on the rotation angle of the motor 5 detected by the rotation angle sensor 7a.

If only the CPU 2 generates a trigger, performance requirements may not be satisfied due to the overhead of process execution during the control of the motor 5 in which hard real-time performance requirements are strict, or self-running control may not be easy during an offloading process from the CPU 2. Therefore, in the example embodiment, the event management apparatus 100 is capable of executing a task in synchronization with not only the CPU trigger but also with a self-generated trigger and an external trigger.

Hereinafter, a specific example of a trigger and a task are described.

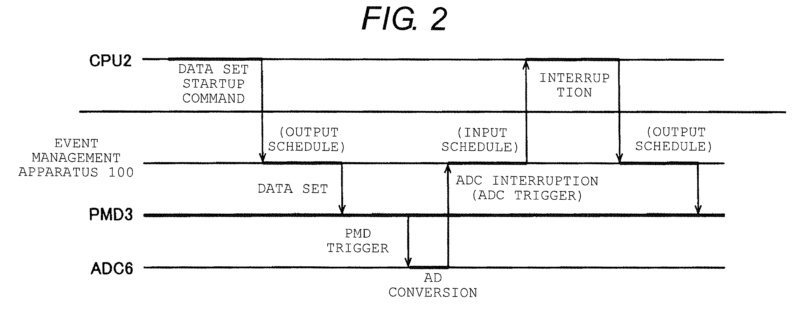

FIG. 2 is a diagram illustrating an example of the CPU trigger and a task. In FIG. 2, a motor control called "vector control" is applied. The CPU 2 outputs a startup command to the event management apparatus 100 as the CPU trigger. The event management apparatus 100 sets data into the PMD 3 according to the CPU trigger based on results of a predetermined output schedule. The PMD 3 drives the motor 5 through the inverter 4 and outputs a PMD trigger to the ADC 6b.

The current-voltage sensor 6a and the ADC 6b convert an analog value of the motor 5 into a digital signal according to the PMD trigger. Once the AD conversion is completed, the ADC 6b outputs an ADC trigger (ADC interruption) to the event management apparatus 100. The event management apparatus 100 acquires the digital signal according to the ADC trigger based on a predetermined input schedule and transfers the digital signal to the CPU as an interruption. The above-described process is repeated.

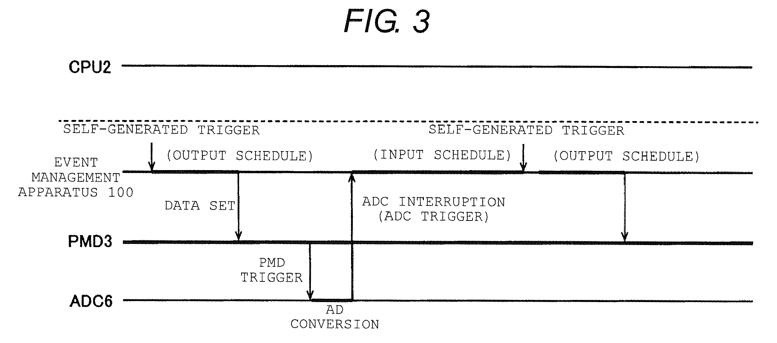

FIG. 3 is a diagram illustrating an example of the self-generated trigger and a task. FIG. 3 illustrates the self-generated trigger generated in the event management apparatus 100. For example, the self-generated trigger is used for the control of a divided task schedule. A specific operation example by the self-generated trigger is described below.

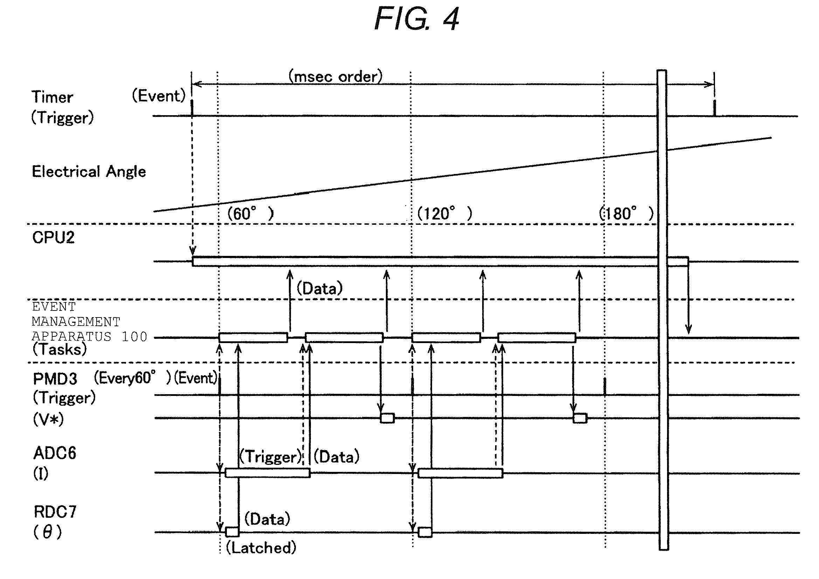

FIG. 4 is a diagram illustrating an example of the external trigger and a task. In FIG. 4, the process of a trigger generated based on the rotation angle of the motor 5 is illustrated, and a motor control called "rectangular wave drive" is applied. The rotation angle sensor 7a and the angle converter 7b generate a rotation angle trigger to the event management apparatus 100, for example, per rotation angle of 60° of the motor. The event management apparatus 100 directly acquires AD conversion data from the ADC 6b according to the rotation angle trigger to control a task schedule.

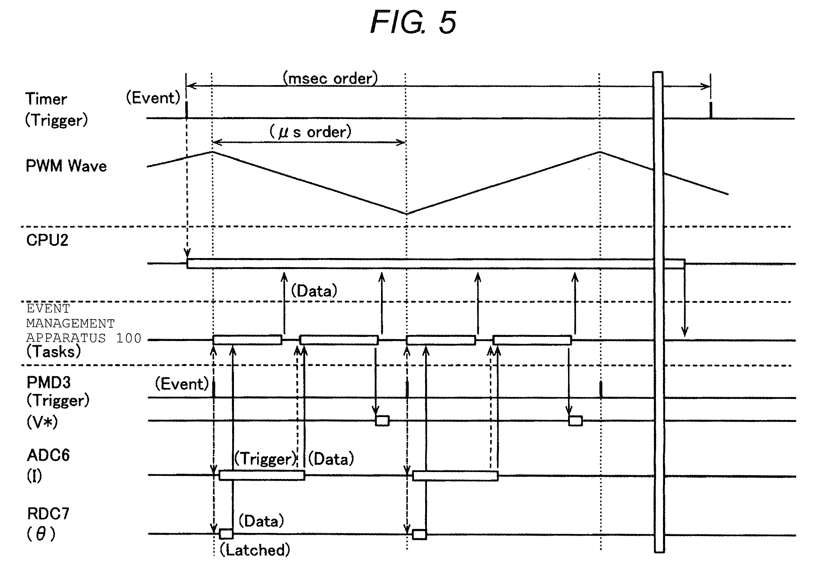

FIG. 5 is a diagram illustrating an example of the external trigger and a task. In FIG. 5, the process of a trigger generated based on a carrier signal for periodically operating the PMD 3 is illustrated, and a motor control called "triangular wave-overmodulation drive" is applied. The event management apparatus 100 supplies a triangular wave (PWM waveform) having a predetermined period to the PMD 3 as a carrier signal. The PMD 3 generates a trigger to the event management apparatus 100 in synchronization with the triangular wave (for example, per half-period at a top and a bottom of the triangular wave) . For example, the event management apparatus 100 directly acquires AD conversion data from the ADC 6b and directly acquires rotation angle information of the motor 5 from the rotation angle sensor 7a and the angle converter 7b according to the trigger to control a task schedule.

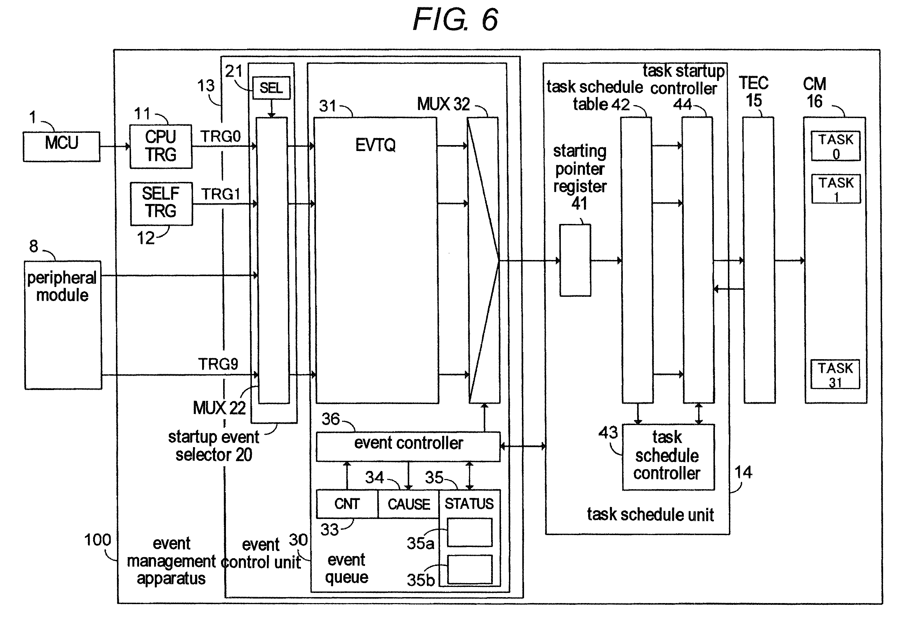

Next, the event management apparatus 100 is described. FIG. 6 is a block diagram schematically illustrating the event management apparatus 100. The event management apparatus 100 includes a CPU trigger register (CPU TRG) 11, a self-generated trigger register (SELF TRG) 12, an event control unit 13, a task schedule unit 14, a task execution controller 15, and a command memory 16.

A peripheral module 8 of FIG. 6 is a collective term for modules connected to the event management apparatus 100 such as the PMD 3, the ADC 6b, and the rotation angle sensor 7a of FIG. 1 and is an arbitrary module capable of generating an external trigger. In the following description, an example in which 10(ten) triggers TRG0 through TRG9 are generated as triggers is described. In this example, the trigger TRG0 is a CPU trigger, the trigger TRG1 is a self-generated trigger, and the triggers TRG2 through TRG9 are external triggers.

In the command memory 16, a task, which is a minimum unit for executing a schedule, is stored as a task code. In the example embodiment, 32 task codes (from TASK0 through TASK31) are stored in the command memory 16. At least one of these task codes may be a task for generating the self-generated trigger.

The CPU trigger is stored in the CPU trigger register 11. The self-generated trigger is stored in the self-generated trigger register 12.

The event control unit 13 designates an execution target task according to the type of the generated trigger. The event control unit 13 includes a startup event selector 20 and an event queue 30.

The startup event selector 20 includes a select register (SEL) 21 and a multiplexer 22. When plural triggers are generated at the same time, a value indicating the execution priority of the triggers is set to the select register 21. When plural triggers are generated at the same time, the multiplexer 22 selects the triggers one by one based on the value set to the select register 21. The startup event selector 20 is not necessarily provided.

The event queue 30 includes an event queue register (EVTQ) 31, a multiplexer 32, a control register (CNT) 33, a cause register (CAUSE) 34, a status register (STATUS) 35, and an event controller 36.

In the event queue register 31, each of the plural triggers TRG0 to TRG9 is associated with a particular task starting pointer PTR. In the event queue register 31 according to the example embodiment, 10 task starting pointers PTR associated with the 10 triggers are set. To each of the task starting pointers PTR, one of the values 0 to 31 corresponding to the task codes TASK0 to TASK31 is set. Hereinafter, it is assumed that a task starting pointer PTRk (k=0 to 9) is associated with a trigger TRGk.

The multiplexer 32 selects one of the task starting pointers PTR0 to PTR9 under the control of the event controller 36. The selected task starting pointer is output to the task schedule unit 14.

The control register 33 is provided with an entry corresponding to each trigger, and an enable signal is set thereto. For example, setting the control register 33 to "0" implies that, even when the trigger TRGk corresponding thereto is generated, a task execution is prohibited. On the other hand, setting the control register 33 to "1" implies that, when the trigger TRGk corresponding thereto is generated, a task execution is allowed.

The cause register 34 is provided with an entry corresponding to each trigger, and whether or not there is a multiple event trigger request is set thereto. The multiple event trigger request refers to a state in which, during the execution of a task corresponding to a trigger, the same trigger is further generated. For example, the setting of the cause register 34 to "0" implies that there is no multiple event trigger request for the trigger TRGk corresponding thereto. On the other hand, the setting of the cause register 34 to "1" implies that there is a multiple event trigger request for the trigger TRGk corresponding thereto. Such a multiple event trigger request is originally prohibited but may be allowed in some cases. Therefore, by providing the cause register 34, whether or not multiple event trigger request is issued may be detected. A value set to the cause register 34 may be used as fail-safe information.

The status register 35 is provided with an entry corresponding to each trigger and includes a receiving status register (RCV) 35a and an execution status register (VLD) 35b.

To the receiving status register 35a, a value is set indicating whether or not a trigger is generated. For example, the setting of the receiving status register 35a to "0" implies that the trigger TRGk corresponding thereto is not generated. On the other hand, the setting of the receiving status register 35a to "1" implies that the trigger TRGk corresponding thereto is generated.

To the execution status register 35b, a value is set indicating whether or not a task corresponding to a trigger is being executed. For example, the setting of the execution status register 35b to "0" implies that a task associated with the trigger TRGk corresponding thereto is not being executed. On the other hand, the setting of the execution status register 35b to "1" implies that a task associated with the trigger TRGk corresponding thereto is being executed.

The event controller 36 reads and writes data from and to the control register 33, the cause register 34, and the status register 35. In addition, the event controller 36 performs the controls based on values read from these registers. For example, the event controller 36 sets a task starting pointer to be selected by the multiplexer 32 based on a value read from the status register 35. In addition, the event controller 36 instructs the task schedule unit 14 to execute a task scheduler operation based on a value read from the status register 35. Further, the event controller 36 receives a notice indicating the completion of a task from the task schedule unit 14 and updates the status register 35 correspondingly.

The task schedule unit 14 executes a task scheduler operation under the control of the event control unit 13. More specifically, the task schedule unit 14 controls execution of a target task according to a task starting pointer output from the event control unit 13. The task schedule unit 14 includes a task starting pointer register 41 (TSKINITP), a task schedule table 42, a task schedule controller 43, and a task startup controller 44.

A task starting pointer PTR selected by the multiplexer 32 is set to the task starting pointer register 41. The task schedule table 42, maintains a relationship between a task starting pointer PTR set into the task starting pointer register 41 and an execution target task set in advance as a task schedule (for example, the output schedule or the input schedule of FIG. 2).

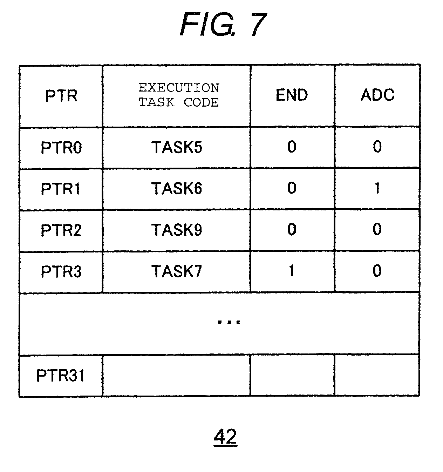

FIG. 7 is a diagram illustrating an example of a structure of the task schedule table 42. In the task schedule table 42, a task starting pointer PTR, an execution task code, an END bit, and an ADC bit are associated with each other. The END bit and the ADC bit are also called control bits.

The execution task code indicates a task to be initially executed according to an associated task starting pointer PTR.

The END bit is set to "0" or "1". The setting of the END bit to "0" implies that, after the execution of a task indicated by an associated execution task code, the next task in the task schedule table 42 is to be executed. The setting of the END bit to "1" implies that, after the execution of a task indicated by an associated execution task code, the task scheduler operation is completed.

The ADC bit is set to "0" or "1". The setting of the ADC bit to "1" implies that, after the execution of a task indicated by an associated execution task code, the event management apparatus 100 maintains "a waiting state" until an ADC trigger is generated. That is, when the ADC bit is set to "1", a subsequent task is executed upon the generation of an ADC trigger.

In an example depicted in FIG. 7, when the task starting pointer PTR0 is set to the task starting pointer register 41, the task indicated by TASK5 is executed first, and then the task indicated by TASK6 is executed. The event management apparatus 100 then waits until an ADC trigger is generated. Upon generation of the ADC , the task indicated by TASK 9 is executed. Next, the task indicated by TASK7 is executed at which point the task scheduler operation is completed.

When a task control instruction is received from the event controller 36, the task schedule controller 43 executes a task scheduler operation based on the task schedule table 42. More specifically, the task schedule controller 43 reads a control bit from the task schedule table 42 and notifies the control bit to the task startup controller 44.

The task startup controller 44 reads an execution task code from the task schedule table 42 according to a task starting pointer PTR and gives notice of the execution task code to the task execution controller (TEC) 15.

The task execution controller 15 obtains the notified task code from the command memory (CM) 16 and executes the task specified by the task code. In addition, after the completion of the task, the task execution controller 15 notifies the completion to the task schedule controller 43 through the task startup controller 44. The task schedule controller 43 reads a control bit from the task schedule table 42 according to the notification. The task startup controller 44 executes a process (for example, a process of executing a subsequent task or waiting for the execution of an ADC task) corresponding to the read control bit.

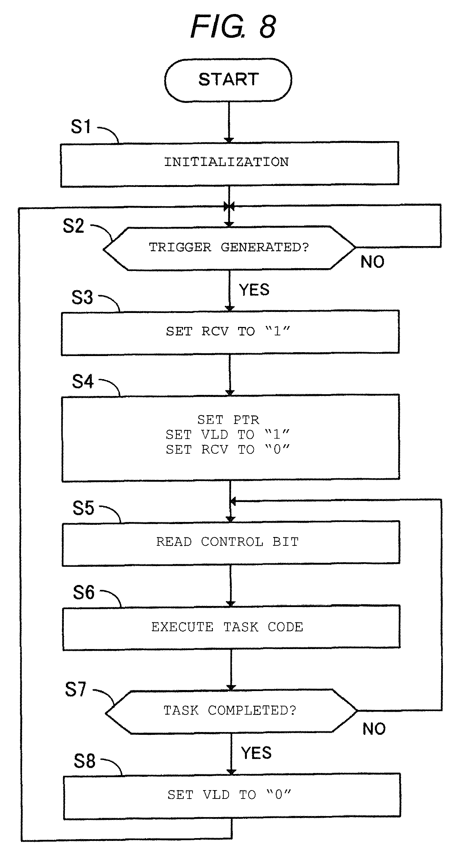

FIG. 8 is a flowchart illustrating an example process of the event management apparatus 100. FIG. 8 illustrates a process when a single trigger TRG is generated.

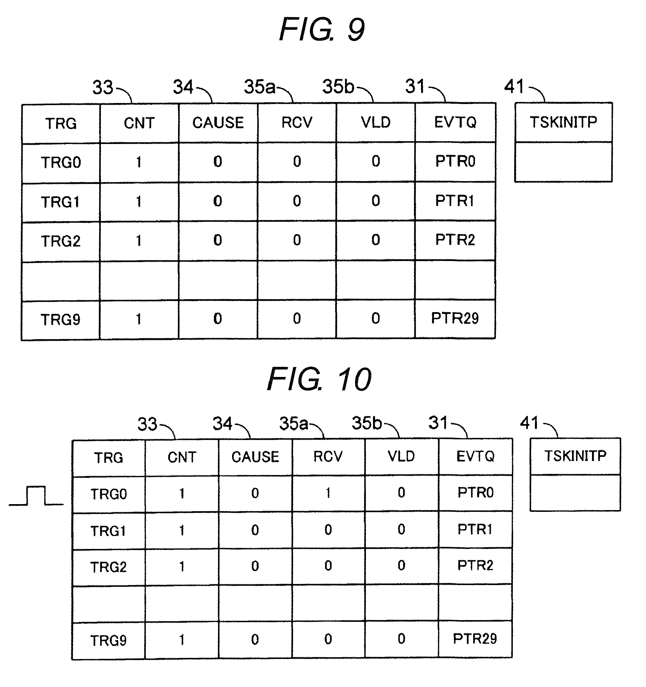

First, each register is initialized (S1). FIG. 9 is a diagram schematically illustrating a value of each register after S1. For example, "1" which allows the execution of a task according to each trigger TRG is set to the control registers 33. "0" is set as an initial value to the cause registers 34 and the receiving status registers 35a and the execution status registers 35b of the status registers 35. In addition, predetermined task starting codes PTR are set to the event queue registers 31. In this stage, no value is set to the task starting pointer register 41.

The event management apparatus 100 waits until a trigger TRG is generated (S2). Upon the trigger TRG being generated (YES in S2), the event controller 36 sets receiving state registers 35a corresponding to the generated trigger TRG to "1" (S3). Hereinafter, a case where the trigger TRG0 is generated is described as an example.

FIG. 10 is a diagram schematically illustrating a value of each register after S3. As illustrated in FIG. 10, the receiving status registers 35a corresponding to the trigger TRG0 is set to "1". The other receiving status registers 35a are maintained at "0".

After S3, a task starting pointer PTR0 associated with the trigger TRG0 is set to the task starting pointer register 41. Further, the event controller 36 sets the receiving status register 35a and the execution status register 35b corresponding to the trigger TRG0 to "0" and "1", respectively (S4). As a result, the task schedule unit 14 is started.

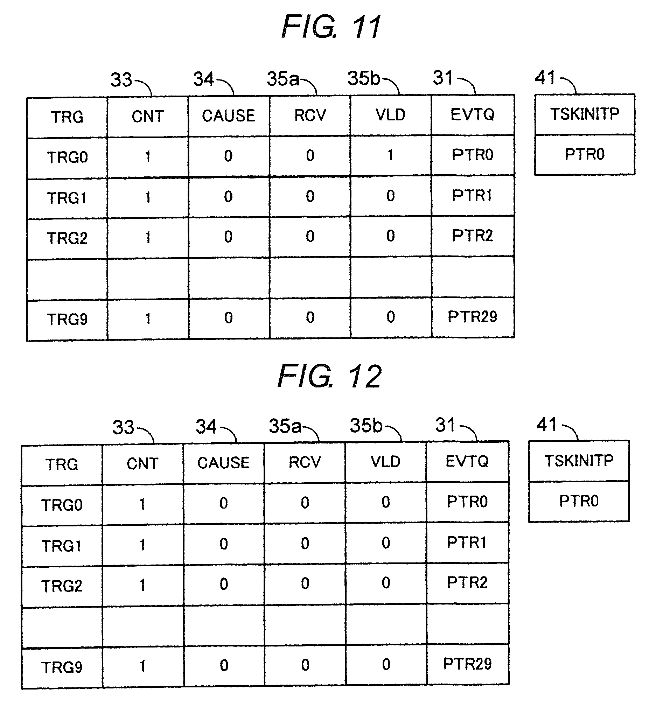

FIG. 11 is a diagram schematically illustrating a value of each register after S4. The task starting pointer PTR0 is set to the task starting pointer register (TSKINITP) 41, and the receiving status register 35a and the execution status register 35b corresponding to the trigger TRG0 are set to "0" and "1", respectively.

Next, the task schedule controller 43 reads a control bit associated with the task starting pointer PTR0 from the task schedule table 42 and notifies the control bit to the task startup controller 44 (S5). The task startup controller 44 reads the execution task code associated with the task starting pointer PTR0 from the task schedule table 42. The read execution task code is notified to the task execution controller 15. As a result, the task execution controller 15 executes the task associated with the notified task code (S6) .

According to the task schedule table 42 illustrated in FIG. 7, when the task starting pointer PTR0 is set, the task codes TASK5, TASK6, TASK9, and TASK7 are sequentially executed. Upon the final task code TASK7 being executed, the execution of all the task codes is completed (YES in S7), the operation of the task schedule unit 14 is completed, and the completion is notified from the task schedule unit 14 to the event controller 36. Accordingly, the event controller 36 sets the execution status register 35b corresponding to the trigger TRG0 to 0 (S8). The event management apparatus 100 waits until the next trigger TRG is generated (S2).

FIG. 12 is a diagram schematically illustrating a value of each register after S8. As illustrated in FIG. 12, all the receiving status registers 35a and the execution status registers 35b are set to "0" and are in a state where the next trigger TRG may be received.

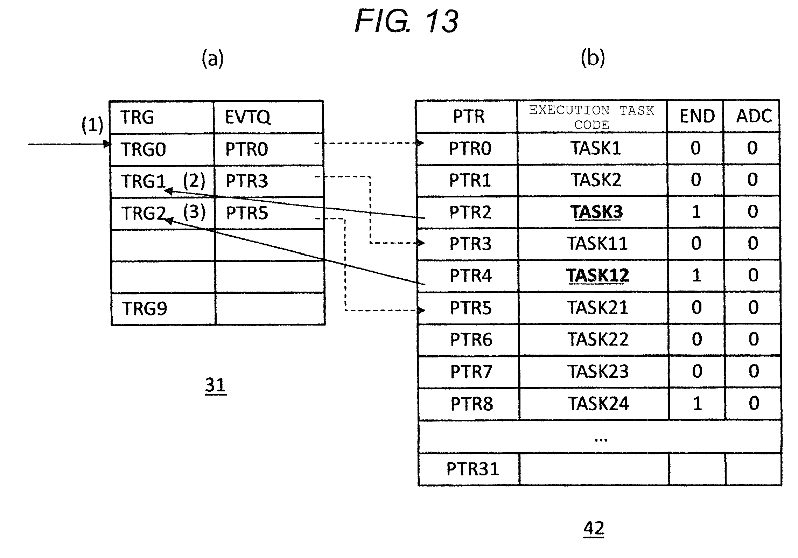

FIG. 13 depicts using tables (a) and (b) a specific example of a process of the event management apparatus 100 which is executed by the self-generated trigger of FIG. 3. Table (a) of FIG. 13 illustrates the event queue register 31, and table (b) of FIG. 13 illustrates the task schedule table 42. In this case, the trigger TRG0 is an external trigger, and the triggers TRG1 and TRG2 are self-generated triggers. More specifically, the trigger TRG1 is generated by executing the task TASK3, and the trigger TRG2 is generated by executing the task TASK12.

When the trigger TRG0 is generated, the tasks TASK1, TASK2, and TASK3 are sequentially executed based on the task starting pointer PTR0 and the task schedule table 42. The task TASK3 being executed generates the self-generated trigger TRG1.

When the trigger TRG1 is generated, the tasks TASK11, and TASK12 are sequentially executed based on the task starting pointer PTR3 and the task schedule table 42. The task TASK12 being executed generates the self-generated trigger TRG2.

When the trigger TRG2 is generated, the tasks TASK21, TASK22, TASK23, and TASK24 are sequentially executed based on the task starting pointer PTR5 and the task schedule table 42, and the task scheduler operation is completed.

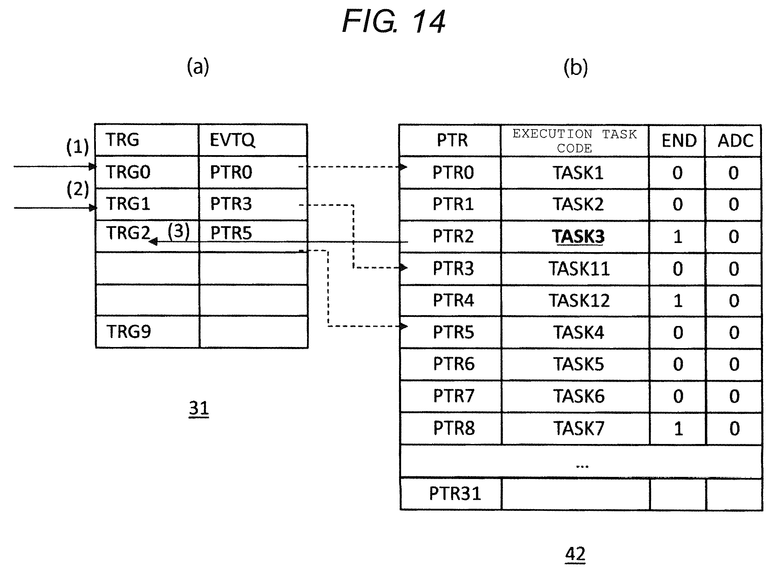

FIG. 14 depicts using tables (a) and (b) another specific example of a process of the event management apparatus 100 which is executed by the self-generated trigger of FIG. 3. The event queue register 31 is set as illustrated in table (a) of FIG. 14, and the task schedule table 42 is set as illustrated in table (b) of FIG. 14. In this case, the triggers TRG0 and TRG1 are external triggers, and the trigger TRG2 is a self-generated trigger. More specifically, the trigger TRG2 is generated by executing the task TASK3.

In addition, the tasks TASK1 to TASK7 are collectively called schedule 1 for convenience of description. The tasks TASK11 and TASK 12 are collectively called schedule 2. As illustrated in table (b) of FIG. 14, schedule 1 is divided into the tasks TASK1 through TASK3 and tasks TASK4 through TASK7.

In the event management apparatus 100, when the external trigger TRG1 is generated after the external trigger TRG0 is generated, schedule 1 is stopped, and schedule 2 may be executed. Hereinafter, the details are described.

When the trigger TRG0 is generated, the tasks TASK1 and TASK2 are sequentially executed based on the task starting pointer PTR0 and the task schedule table 42.

Further, it is assumed that the trigger TRG1 is generated during the execution of the task TASK3. In this case, the execution of the task TASK3 is completed first, and then the self-generated trigger TRG2 is generated. This self-generated trigger TRG2 is queued in the receiving status register 35a.

Next, the tasks TASK11 and TASK12 are sequentially executed based on the task starting pointer PTR3 associated with the trigger TRG1 and the task schedule table 42. As a result, schedule 2 is completed.

Next, the tasks TASK4, TASK5, TASK6, and TASK7 are sequentially executed based on the task starting pointer PTR5 associated with the queued self-generated trigger TRG2 and the task schedule table 42. As a result, a task scheduler operation is completed. In this way, since the self-generated trigger is used in the example embodiment, schedule 1 is divided into the tasks TASK1 to TASK3 and the tasks TASK4 to TASK7 to be executed.

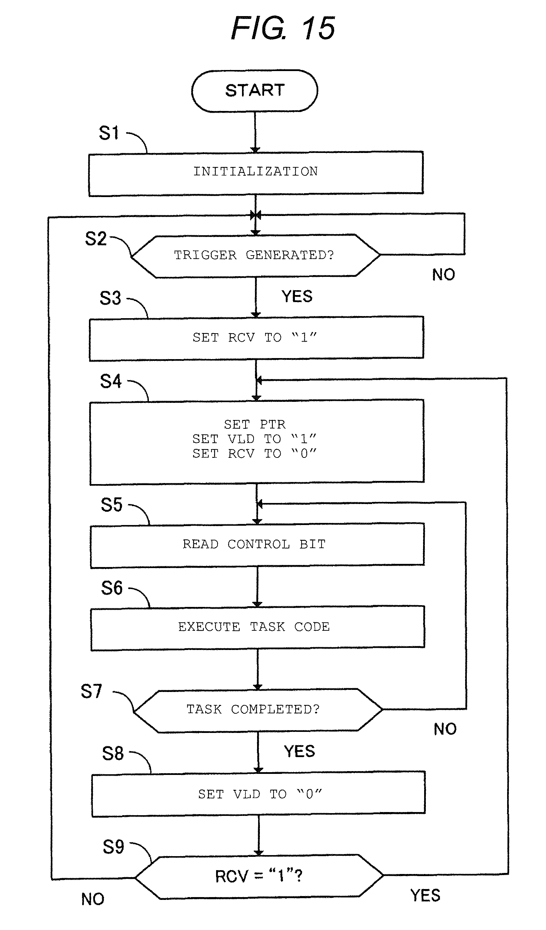

FIG. 15 is a flowchart illustrating another example of a process of the event management apparatus 100. Unlike FIG. 8, FIG. 15 illustrates the process in which plural triggers TRG are generated at the same time. Hereinafter, different points from those of FIG. 8 are mainly described.

When the plural triggers TRG are generated (YES in S2), the event controller 36 sets the receiving status registers 35a corresponding to all the generated triggers TRG to "1" (S3) . Hereinafter, an example in which the triggers TRG0 and TRG1 are generated is described.

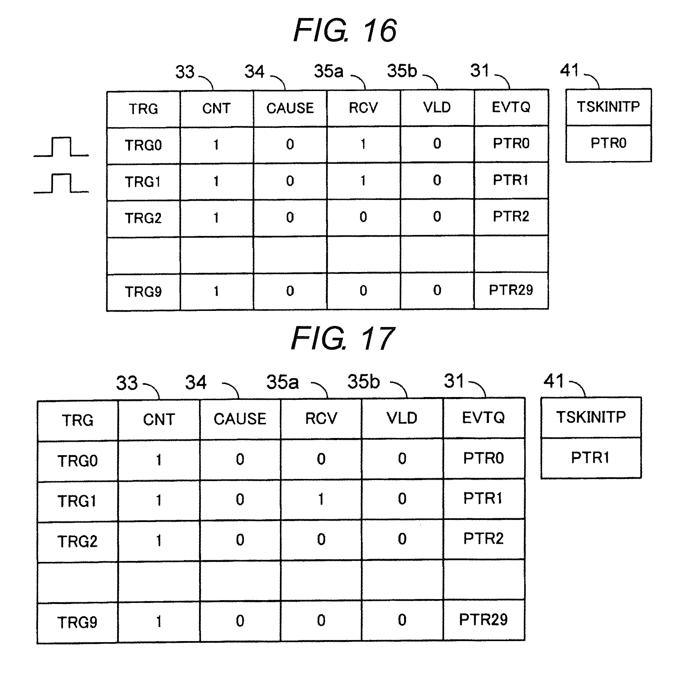

FIG. 16 is a diagram schematically illustrating a value of each register after S3. Two receiving status registers 35a corresponding to the triggers TRG0 and TRG1 are set to "1". Tasks are executed in descending order of a predetermined priority by the task schedule unit 14 and the task execution controller 15. In this example, the priority is decreased from the highest priority for trigger TRG0 to the lowest priority for trigger TRG9. In this case, a task corresponding to the trigger TRG0 is executed first (S4 to S6). After the completion of the task corresponding to the trigger TRG0 (YES in S7), the execution status register 35b corresponding to the trigger TRG0 is set to "0" (S8).

FIG. 17 is a diagram schematically illustrating a value of each register after S8. The receiving status registers 35a and the execution status register 35b corresponding to the trigger TRG0 are set to "0". On the other hand, the receiving status register 35a corresponding to the trigger TRG1 is maintained at "1".

In this way, when the receiving status register 35a set to "1" remains (YES in S9), a subsequent task is executed. That is, a task corresponding to the trigger TRG1 is executed (S4 to S6). Since the subsequent processes are the same as those of FIG. 8, the description thereof is not repeated.

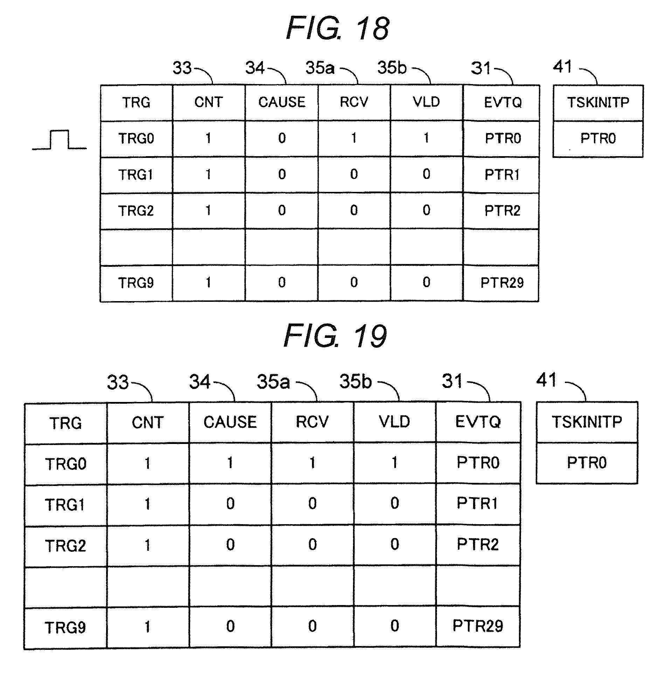

Next, the multiple event trigger request is described. For example, it is assumed that, when the task corresponding to the trigger TRG0 is being executed upon the trigger TRG0 being generated, the trigger TRG0 is further generated. In this case, the event controller 36 sets the receiving status register 35a corresponding to the trigger TRG0 to "1". A value of each register is set as illustrated in FIG. 18.

In this case, the task schedule unit 14 continuously executes the schedule which is being executed. On the other hand, the event controller 36 sets the cause register 34 to "1" by the trigger TRG0 being generated during the execution of the task corresponding to the trigger TRG0. As a result, a value of each register is set as illustrated in FIG. 19, and the event management apparatus 100 is in a multiple event receiving status.

In this way, in the event queue register 31 of the example embodiment, plural triggers are set to be associated with task starting pointers. These triggers include a self-generated trigger generated in the event management apparatus 100. Accordingly, a schedule may be divided to be executed, and thus high-performance task schedule control may be achieved.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An event management apparatus comprising:
an event queue register which associates each of a plurality of triggers with one of a plurality of task starting pointers; and
a task execution controller that executes, when one of the plurality of triggers is generated, a task based on a task starting pointer associated with the generated trigger,
wherein the plurality of triggers includes an external trigger and a self-generated trigger which is generated in the event management apparatus.

2. The event management apparatus according to claim 1, wherein the self-generated trigger is generated by executing a first task using the task execution controller.

3. The event management apparatus according to claim 1 or 2, further comprising:
a cause register that sets a value for each trigger indicating that the same trigger may be generated while a task corresponding to the trigger is being executed.

4. The event management apparatus according to one of claims 1 to 3, further comprising:
a task schedule unit configured to obtain a task starting pointer from the event queue register and schedule a task based on the obtained pointer.

5. The event management apparatus according to claim 4, further comprising:
a task schedule table in the task schedule unit, the task schedule table storing for each task to be executed by the task execution controller, a task starting pointer, a task code, and a bit that indicates whether multiple tasks are to be executed in response to the generated trigger.

6. The event management apparatus according to claim 5, wherein if a bit for a currently executed task is set to a first value, a next task in the task schedule table is to be executed upon completion of the currently executed task, and if the bit for the currently executed task is set to a second value, the self-generated trigger is to be generated in the event management apparatus.

7. The event management apparatus according to claim 5 or 6, wherein one of the task codes is associated with a task for generating the self-generated trigger.

8. A motor system comprising:
a motor;
an event management apparatus; and
wherein the event management apparatus includes
an event queue register which associates each of a plurality of triggers with one of a plurality of task starting pointers, and
a task execution controller that executes, when one of the plurality of triggers is generated, a task based on a task starting pointer associated with the generated trigger; and
a motor controller that controls the motor using the event management apparatus,
wherein the plurality of triggers includes an external trigger and a self-generated trigger which is generated in the event management apparatus.

9. The motor system according to claim 8, wherein the self-generated trigger is generated by executing a first task using the task execution controller.

10. The motor system according to claim 8 or 9, further comprising:
a cause register that sets a value for each trigger indicating that the same trigger may be generated while a task corresponding to the trigger is being executed.

11. The motor system according to one of claims 8 to 10, further comprising:
a task schedule unit configured to obtain a task starting pointer from the event queue register and schedule a task based on the obtained pointer.

12. The motor system according to claim 11, further comprising:
a task schedule table in the task schedule unit, the task schedule table storing for each task to be executed by the task execution controller, a task starting pointer, a task code, and a bit that indicates whether multiple tasks are to be executed in response to the generated trigger.

13. The motor system according to claim 12, wherein if a bit for a currently executed task is set to a first value, a next task in the task schedule table is to be executed upon completion of the currently executed task, and if the bit for the currently executed task is set to a second value, the self-generated trigger is to be generated in the event management apparatus.

14. The motor system according to one of claims 11 to 13, wherein one of the task codes is associated with a task for generating the self-generated trigger.

15. An event management method in an event management apparatus including an event queue register which associates each of a plurality of triggers with one of a plurality task starting pointers, the method comprising:
executing, when one of the plurality of triggers is generated, a task based on a task starting pointer associated with the generated trigger,
wherein the plurality of triggers includes an external trigger and a self-generated trigger which is generated in the event management apparatus.

16. The event management method according to claim 15, further comprising:
generating the self-generated trigger by executing a first task using the task execution controller.

17. The event management method according to claim 15 or 16, further comprising:
obtaining a task starting pointer from the event queue register; and
scheduling a task based on the obtained pointer.

18. The event management method according to claim 17, further comprising:
maintaining a task schedule table that stores for each task to be executed by the task execution controller, a task starting pointer, a task code, and a bit that indicates whether multiple tasks are to be executed in response to the generated trigger.

19. The event management method according to claim 18, wherein if a bit for a currently executed task is set to a first value, a next task in the task schedule table is to be executed upon completion of the currently executed task, and if the bit for the currently executed task is set to a second value, the self-generated trigger is to be generated in the event management apparatus.

20. The event management method according to claim 18 or 19, wherein one of the task codes is a task for generating the self-generated trigger.
